# EUROPEAN PATENT APPLICATION

(11) **EP 1 045 388 A1**
(43) Date of publication of application: **18.10.2000**
(21) Application number: 99108640.6
(22) Date of filing: 12.05.1999
(51) Int. Cl.: G11B 20/00

(54) **Method and apparatus for preventing illegal usage of multimedia content**

(30) Priority: 16.04.1999 EP 99107643
(71) Applicant: DEUTSCHE THOMSON-BRANDT GMBH, 78048 Villingen-Schwenningen (DE)
(72) Inventor: Herpel, Carsten, 30171 Hannover (DE); Aust, Andreas, 30177 Hannover (DE); Schreiber, Ulrich, 30827 Garbsen (DE); Böhm, Johannes, 30167 Hannover (DE)
(74) Representative: Wördemann, Hermes, Dipl.-Ing.

(57) **Abstract**

The invention proposes a method to manage the rights associated to a multimedia content item (like digital music, video or software) in order to satisfy both the legitimate rights of the content author or rights owner and the legitimate user of such content. In the time of mass storage devices that can be used as media servers, this requires easy ways to move content as well as the rights to use it, the usage license. Moving the rights to a new location implies that the item at its new location is now the legitimate original version that may be played back or from which (for example) one further copy may be derived. In a simple embodiment, this can be accomplished by swapping the value of a flag indicating original or copy between the previous original and the new version of the item. In future digital systems with encrypted or partially encrypted content, this can be accomplished as well by a descriptor that describes the rights associated to a multimedia content item and a location-specific decryption key associated to it. Advantageously, the original multimedia content item need not be deleted from the primary mass storage device, or media server, allowing for a temporary lease of play back rights to secondary, possibly mobile devices.

## Description

The invention relates to a method for preventing illegal content copies of multimedia content while preserving sufficient flexibility for the legitimate content user.

### Background

Current digital media like DAT and MiniDisk include a mechanism that prevents the generation of multiple digital copies of a content item. In that case, only one digital copy is authorized. With future digital multimedia systems, copy protection will become more sophisticated and even more enforcable.

This may have the disadvantage that the legitimate user cannot freely move the content between different storage media (i.e., disks, tapes) since such a move implies that the content item is considered as "copied". Therefor further copies become illegal and will be prohibited by the device.

If copies from digital multimedia sources are not made digitally but in the analog domain, copying is not restricted by the currently existing digital audio and video, however the quality is sacrificed.

Otherwise, digital multimedia content, like digitally coded music in MP3 format can currently be downloaded with subscription from the Internet and afterwards freely copied without loss of quality and additional fees to the content owner.

### Invention

It is an object of the present invention to disclose a novel method for preventing illegal usage of multimedia content while preserving sufficient flexibility for the legitimate content user and an apparatus performing such method.

According to the invention, this object is achieved by means of the features specified in main claims. Advantageous designs and developments are specified in subclaims.

With the advent of digital multimedia content distribution formats, including digital music, video or software, the unauthorized copying of multimedia content items becomes more and more a problem from the perspective of the content author or rights owner. Restrictions on content accessibility are needed, however, they should not be a nuisance to a legitimate owner of the rights to use such a content item.

It is assumed that multimedia content in future will be stored on mass storage devices, or media servers, that become part of the home entertainment equipment. On the other hand, there will be mobile devices used for play back. A content descriptor associated to each multimedia content item forms the basis for managing the use of content in a flexible manner from the perspective of the user, while still guaranteeing that any restrictions in the usage of the content are observed. Most notably, such content descriptors help to avoid unnecessary copying of the content item itself, by allowing to just move the right to use the content item from one device to another, instead of moving the complete multimedia content item, as detailed in this invention. Moving of the rights means that the multimedia content item at its new location is now the legitimate original that may be played back and from which, for example, one further copy may be derived, if permitted by the associated rights.

In a simple embodiment, this can be accomplished by swapping the value of a flag indicating original or copy between the previous original and the new version of the item. In future digital systems with encrypted or partially encrypted content, this can be accomplished by the said content descriptor that describes the rights associated to a multimedia content item and that includes a location-specific decryption key. Advantageously, the original multimedia content item need not be deleted from the primary mass storage device, or media server, allowing for a temporary lease of play back rights to secondary, possibly mobile devices.

Digital multimedia material, like audio, video, text, games, software, etc., will be available both on consumer electronics and computer platforms. The invention holds independent of the location of the item of multimedia content. It actually becomes more important in such a situation.

### Exemplary embodiments

Exemplary embodiments of the invention are explained in more detail in the following description.

The invention proposes multimedia content items to be accompanied by content descriptors that specify the legitimate rights that are associated to the content item. Content descriptors can be associated to multimedia content items by referencing object or stream identifiers related to the content item in the content descriptor. In order to make such an association unambiguous and to ensure that it cannot be easily broken, advantageously a unique signature for a content item can be included in the content signal itself by means such as watermarking. The same signature can then be referenced in the content descriptor. The content descriptor is considered not visible to the user and made tamper-proof by means of authentication.

Such a secure tie between the content descriptor conveying the usage rights information and the content item itself allows to establish procedures, as claimed in this invention, to copy the actual multimedia content item freely while maintaining tight control over the ability to use it. This is specifically important when content items are frequently swapped between different storage and play back devices, for example, a media server located in the users' home and a portable player device. Depending on the storage size of the portable device, frequently played content need not be copied from the media server each time. As long as the item is still physically present on the portable device, only the usage license, which is a rather small amount of data, has to be swapped between the media server and the portable device. Hence, content that is only authorized for a limited number of concurrently existing copies can be used efficiently on multiple devices.

The procedure to transfer a multimedia content item and its associated usage rights, embedded in a content descriptor, from a primary storage device to a secondary device, possibly a player device, has to be tamper-proof. The following steps must be followed: First the multimedia content item itself is copied to the secondary device, if it is not yet present there. Secondly, the content descriptor is copied to the secondary device. In case of encrypted or partially encrypted content, this descriptor will contain the decryption key valid for the primary device. Thirdly, the content descriptor on the primary device is removed. Then, fourthly, a new decryption key for use of the multimedia content item on the secondary device is generated and inserted in the copied content descriptor.

The said procedure advantageously assumes that decryption keys are valid only for a single storage device or a single player application. Therefor, the copied multimedia content item with the copied content descriptor will not be playable on the secondary device before a new key has been generated. In that case the procedure is tamper-proof with respect to illicit duplication of licenses by interruption of the procedure.

Advantageously, this procedure is handled by a piece of trusted software or dedicated hardware. In order to further improve security of this procedure, a secure communication channel should be used between the devices, especially if the transaction occurs in a wide area network, such as the Internet. Optionally, the trusted software or dedicated hardware may as well establish a secure communication channel to a third party that authorizes the said procedure. After this procedure, the multimedia content item is physically present on both the primary and the secondary device. However, it is only playable on the secondary device until the license, in the form of the content descriptor, is given back to the primary device.

Optionally, an additional license may be generated, after payment of the applicable dues, to make the content on the primary device accessible independent of the license that has been transfered to the secondary device. Conversely, if the multimedia content item is no longer needed on the primary device, it can be physically deleted, since the secondary device now contains a copy that has all the rights previously associated to the original version of the item. Specifically, this includes usage rights and the right to move the multimedia content item to a further third device at any time. Usage rights might include the permission to generate one or more copies of the multimedia content item.

Preferrably, the media server maintains a complete data base of multimedia content items at all times. The number of authorized playable copies from this data base may be controlled with the aforementioned procedure. Each time a copy is made, the license data base of the server is updated appropriately. Depending on the status of the license information, it may not be possible to derive further copies.

In a further preferred embodiment, the content descriptor consists of a number of flags including an original/copy flag. The rights associated to the original include the permission to generate one digital copy of the content item, while no further copies may be generated from a content item already marked as copy.

Moving the rights of a multimedia content item in that case corresponds to the following procedure: Copy the item of multimedia content first with the original/copy flag set to indicate 'copy'. Then reset the original/copy flag in the original file to 'copy' status and set the original/copy flag in the new file to indicate 'original'. This is tamper-proof, since in case of power failure, etc. in the worst case both versions of the item will be labeled as copies. Optionally a verifying process can be invoked and, as a last step, the original item may be deleted if it is not retained as a copy.

In a further preferred embodiment this procedure can apply not only to multimedia contents but to software applications like multimedia-players, dictionary, route-planner themselves.

A content descriptor for multimedia content items contains at least one of the following elements:
. A key for decryption
. A cryption descriptor indicating the parts of the media file that are encrypted and the encryption scheme
. A flag indicating the file is an original or a copy (orig/copy flag),
. Copy bits for indicating the copy status, for example: CGMS bits and a copies-made counter
. A media active bit indicating the media file is usable by the device

## Claims

1. Method for preventing illegal usage of multimedia content stored on a primary mass storage device, characterised by that
the multimedia content item is encrypted or partially encrypted,
the multimedia content item is unambiguously labeled with a content descriptor,
the content descriptor conveys the rights associated to the multimedia content item,
the content descriptor conveys the cryption keys associated to the multimedia content item,
the data concerning the rights to use each multimedia content item is moved from the primary storage device to a secondary storage device by transfering both the multimedia content item and the content descriptor without deleting the multimedia content item on the primary device.

2. Method according to claim 1, wherein only the content descriptor is transfered from the primary device to the secondary device if the multimedia content item is already present on the secondary device.

3. Method according to claim 1, wherein unambiguous labeling of a multimedia content item with a content descriptor is achieved by an auxiliary authentication signal that is both inserted in the multimedia content item and conveyed as part of the content descriptor.

4. Method according to claim 1, wherein the cryption keys enable the use of a multimedia content item only at a given storage location and in conjunction with a specific instance of a multimedia player application.

5. Method according to claim 1 or claim 2, wherein moving the data concerning the rights associated to a multimedia content item from the primary to a secondary device is done using a piece of trust-worthy software or dedicated hardware over a secure communication channel.

6. Method according to claim 1 or claim 2, wherein after optionally copying of the multimedia content item, firstly the content descriptor is copied to the secondary device, secondly the content descriptor containing the decryption key for the original multimedia content item is removed from the primary device, and thirdly a new decryption key for use of the multimedia content item on the secondary device is generated and inserted in the copied content descriptor.

7. Method according to claim 6, wherein an additional decryption key is generated for the primary device on permit.

8. Method according to claim 1, wherein the rights identification in the content descriptor is embodied by an original/copy indication, specifying the original version of the multimedia content as having unrestricted rights and the copy as having restricted rights.

9. Method according to any of claims 1 to 8, including: moving of the original version of an item of multimedia content labeled with an original/copy indication from a primary storage device to a secondary device, by the steps of:
copying the item with the original/copy indication set to indicate a copy,
resetting the original/copy indication in the original file to copy status and
setting the original/copy indication in the new file to indicate original.

10. Method according to any of claims 1 to 9, wherein a verifying process is invoked and in case of successful moving the multimedia content item from the first to the second storage device the previous original multimedia content item on the first storage device is deleted.

11. Method according to any of claims 1 to 10, wherein, if moving of the multimedia content item is permitted, a move indicator in a user interface of the primary or secondary storage device is enabled.

12. Method according to claim 1, wherein the content descriptor is stored within a non-movable storage area of the source or receiving device.

13. Method according to claim 1, wherein the content descriptor contains one or more of the following elements:
a key for decryption,
a cryption descriptor indicating the parts of the item of multimedia content that are encrypted and the encryption scheme,
a flag indicating the item of multimedia content is an original or a copy,
a copy descriptor indicating the copy status and a copies-made counter,
an item of multimedia content active descriptor indicating that the multimedia content item is usable by the source or receiving device.

14. Method according to any of claim 1 to claim 5, wherein the said trust-worthy software or dedicated hardware optionally obtains authorization for the said process of moving the data concerning the rights associated to a multimedia content item from a third party over a secure communication channel.

15. Aparatus for preventing illegal usage of multimedia content stored on a primary mass storage device, characterised by
means for encrypting or partially encrypting the multimedia content item,
means for unambiguously labeling the multimedia content item with a content descriptor conveying the rights and/or the cryption keys associated to the multimedia content item,
means of moving the data concerning the rights to use each multimedia content item from the primary storage device to a secondary storage device by transfering both the multimedia content item and the content descriptor without deleting the multimedia content item on the primary device.
